# EUROPEAN PATENT SPECIFICATION

(11) **EP 0 901 543 B1**
(45) Date of publication and mention of the grant of the patent: **26.09.2001**
(21) Application number: 97923361.6
(22) Date of filing: 23.05.1997
(51) Int. Cl.: E04B 1/80, F16L 59/06

(54) **THERMO-INSULATING PANEL**
WÄRMEISOLATIONSPANEEL
PANNEAU THERMO-ISOLANT

(30) Priority: 24.05.1996 PL 31443996
(43) Date of publication of application: 17.03.1999
(73) Proprietor: Paszkowski, Mariusz, 31-002 Krakow (PL)
(72) Inventor: Paszkowski, Mariusz, 31-002 Krakow (PL)
(74) Representative: Patentanwälte Zellentin & Partner
(86) International application number: PL9700011
(87) International publication number: WO9745602

(56) References cited:
- EP-A- 0 294 176
- EP-A- 0 434 226
- US-A- 4 317 854
- US-A- 4 783 356
- US-A- 5 011 729
- US-A- 5 271 980

## Description

### Field of the invention

The subject of the invention is a flat, thermo-insulating panel of a very low heat penetration coefficient. Its primary fields of application are building, both housing and industry, power industry and cold stores engineering. The panel solution can be also employed for thermal insulation of various technological devices, particularly stationary and mobile isothermic tanks, and in portable equipment such as refrigerators, freezers, as well as moveable and fixed iso-thermic load-carrying containers of trucks and refrigerator cars.

### Background of the invention

There are panel solutions which are constructed of multilayer packets of materials of thermo-insulating properties, in which layers of material are not in direct contact, separated with air gap(s). In order to limit radiation the surfaces of material layers surrounding the air gap are covered with insulating material coatings of a high heat-reflectivity coefficient. One of such solutions is described in the Polish patent specification no PL-155 160. The material layers of the panel are set in fixed distances from one another by the distancing unit, which comprises numerous connectors laid out on the surface. In such a solution heat is transported through air gaps by way of convection, gas medium conductivity and radiation; besides, a significant thermal flux penetrates through the connector system.

The highest parameters of thermal insulation are shown by those elements in which the heat transport path is cut off with a vacuum gap and whose walls are covered with highly heat reflective metal, e.g. with a silver or aluminum coating. The application of this construction principle is limited due to considerable atmospheric pressure on the walls of the vacuum gap. That is why the vacuum gap solutions known hitherto have the shape of coaxial solids of revolution, which are the most pressure-resistant. The realization of a flat, panel thermo-insulating element with a vacuum gap requires the employment of strutting distancing units, which would be placed between the walls of material layers. For the panels of practically useable dimensions, the technical difficulty lies in the fact that the total section of distancing units (realized in accordance with accepted technological solutions and ensuring the pressure transfer capacity of 100 kN/m2) must constitute a significantly high percentage of the overall surface. As a result, distancing units, for example frame work of hard foam or hard fibre glass plate, would transmit, by way of conductivity, a significant heat flux, which would radically deteriorate the thermal insulation properties of the panel and undermine the usefulness of vacuum gap solution in panels.

There are thermo-insulating panel solutions the idea of which is based on the assumption that the construction of the distancing unit should ensure the conversion of compressive forces into tensile forces, for the purpose of which a system resembling a suspension bridge is employed. The load-bearing capacity resulting from tensile strength of tension strings (flaccid connectors) is dependent exclusively on the smallest cross-section area and is virtually independent of the length parameter. These conditions are in agreement with the measures necessary to reduce the conductive thermal flux through a given element: reduction of the cross-section and lengthening of the heat transfer path.

In the thermo-insulating panel known from the description of patent US-A- 5 271 980 the gap between material layers is suspended by distancing units. The distancing units are created by the meshed cogs and niches made on both the adjoining surfaces of the material layers, separated with the gap by means of a stretched tension string, zigzagging and fixed between cog tips of both material layers. The tension string has the form of a high-strength glass fibre, foil or a reinforcing fibre net. Furthermore, the panel is equipped with a gas evacuation pipe, tightly fastened to the coating, leading through the material layer to the outside and closed with the cutting-off element, due to which in the gap between the material layers a high vacuum is obtained.

A similar solution is described in patent US-A- 4 317 854. The distancing unit also makes use of a tension string (a foil membrane), fixed at the edges of the panel and stretched by atmospheric pressure in the gap between material layers, supported altematively on the cog tips of both material layers. In both the solutions described the material layers and the tension string are fixed to the panel edges tightly glued or seam welded to each other, which in panels assembled into larger thermo-insulated surfaces constitutes heat bridges zones, where the heat transfer is intensified.

In still another known solution, according to patent US-A- 5 011 729, the panel is comprised of two flaccid, flexible extemal layers, mutually separated with a vaccum gap and kept apart by the distancing unit which is constituted by a rigid skeleton of a frame construction. The atmospheric pressure influencing the elastic material layers is transferred by transversal pillars ending with convex surfaces. In order to reduce heat transfer through the pillars, they are made of two coaxially contacted via a glass bead. The elementary pillar couple is positioned coaxially by external cylindrical shanks. The edges of the panel delimited by the lateral extension of the frame have the sides perpendicular to the main axial surface of the panel.

The nature of the panel solution, according to this invention, consists in the fact that each of the distancing units positioned in the gap possesses the bearing element and two complexes of mutually embedded shells. The shells are suspended on the ends of the central bearing element and relative to each other by means of tension strings. Each connector is wound around the bearing element, the edge of the inner shell and, consecutively, around the bottom of the smaller shell and around the edge of the larger shell of the complex, while its ends are fastened to the outer shell. The panel is equipped with a gas evacuation pipe, linked tightly to the coating, leading through the material layer to the outside and closed with the cutting-off element. In the gap between the material layers a high vacuum is obtained.

In such a solution, the conversion of compressive forces into tensile forces is effected through a system of tension strings of high tensile strength and a low thermal conductivity coefficient. The system of coaxial shells, suspended on the connectors, one embedded in the other, forces a labyrinthine heat flux through the connectors, with the flow path length increased many times when compared to the depth of the distancing unit. The massive axial bearing element of the distancing unit transfers the compressive load, but does not play any role in thermal insulation.

An advantageous extension of the invention is the modeling of material layer surfaces, covered with heat reflective coating, into a regular relief which consists of surfaces convex towards the outside (between the adjoining distancing units). Such modeling ensures the purely tensile stress field in all points of the coating material, which adheres to the material layer and which is made, for instance, of polyurethane foam or foamed concrete.

The distancing units may constitute point or line support elements. In the point solution there is a rod-shaped bearing element, bowl-shaped shells and strings of high-strength fibre (esp. aramid) connectors. The bowl-shaped shells may have the side surface of any shape: parabolic, conic or cylindrical. The line distancing unit has the slat-shaped bearing element, groove-like shells and their connectors may have the form of a high-strength fibre, a fibre net, foil or a fibre net sealed in foil. In each distancing unit the shells may consist of two separate, cylindrical contactless complexes, they may also be tucked into each other telescopically at both ends of the unit, which doubles the heat flow path.

In order to reduce the harmful heat exchange between elements of distancing units, bearing elements, shells and connectors may be covered with the coating of highly infrared radiation-reflective material.

Another extension of the invention consists in the employment of antiradiation screen, positioned in the central plane of the gap. The installation of the screen, comprising the packet of metallized foils, connected pointwise with microgaps between the foils, leads to a significant reduction of heat exchange which occurs through infrared radiation.

Further development of the invention concerns a unique gap closure solution at the periphery of the panel and the panels' contact junction construction which endows it with thermal insulation properties approximating those occurring in the central plane of panel interior. The margins consist of two extruded sections, double- and triple-pointed one, each tightly fastened with one of its arms to the edge of the material layer. The remaining arms form a labirynth consisting of a U-trough of the triple-pointed slat and the second arm of the double-pointed slat, inserted in the former in the axis of symmetry. The arms are suspended on the bearing foil, which is tightly fastened to the outer surfaces of the U-trough arms. The surfaces of double-pointed slats, triple-pointed slats and the bearing foil have the coating of a high reflectivity coefficient. The panels' junction possesses two sealing tapes whose shapes correspond to the shape of the space between the margins of the two panels which are in contact: one tape seals the space between the outer arms of the U-trough, the other - between the comers of double-pointed slats. The tape sealing the comers of the double-pointed slats has a gas evacuation pipe ending with the cutting-off element.

Into the gap of the panel the getter is introduced, which absorbs the residue gas remaining after the air is sucked off during the assembly, and permeating, by way of diffusion, through the coating into the gap during the many years of operation. It is beneficial for the replaceable getter to have the form of a removable elastic, linear porous agent, inserted into the gap through the gas evacuation pipe, due to which its replacement is possible.

The second solution which takes advantage of the general invention idea presented at the outset is that of a panel whose distancing unit consists of meshed cogs (half-columns) and niches, occurring on both the adjoining material layer surfaces. The material layers are separated with the vacuum gap by means of a stressed tension string, zigzagging and fixed between cog tips of both material layers.The essence of the solution consists in the fact that at the panel periphery there is an overlap made of a material layer which ends with a niche, and has the surface which is concave relative to the central plane. The tension strip, made of foil, is tightly fastened to the front surface of the overlap and separately to each cog tip inside the panel.
The panel edge solution is adjusted to close adhesion with adjoining panels; such solution guarantees thermo-insulation parameters almost identical to the centre of the panel. Moreover, the corresponding flexible foil edges are glued to each other during the assembly; the overlap thus produced eliminates the harmful diffusion of atmospheric gases into the vacuum gap through tin foil strip on the edges of the panel. At the same time, the permanent fixing of the tension string on each cog tip allows each section of the tension string to be mechanically independent. In other words, the atmospheric pressure load does not accumulate on the whole length of the string.

It is beneficial to use as a tension string the foil covered on both sides with the coating of material of a high reflectivity coefficient, which also serves the function of antiradiation screen.

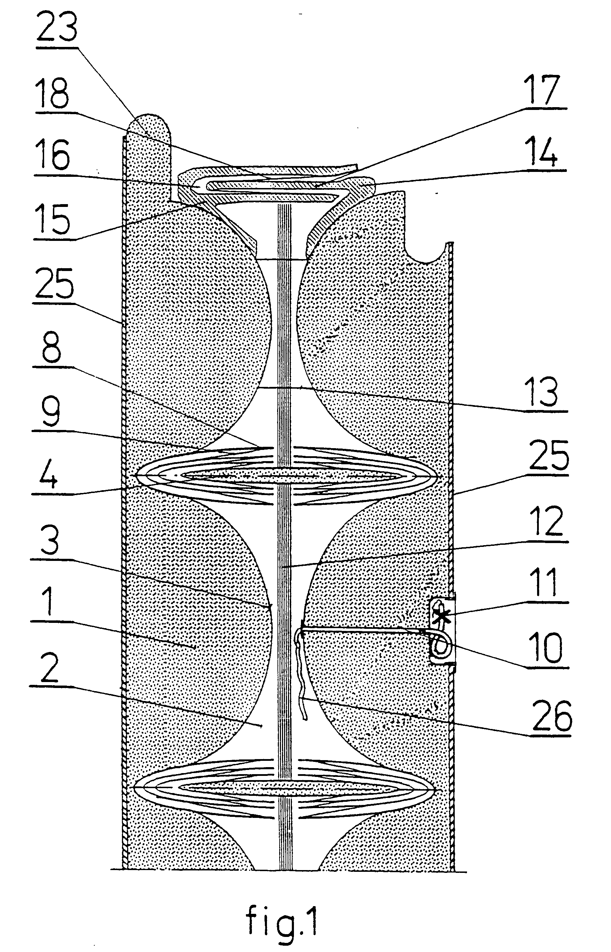

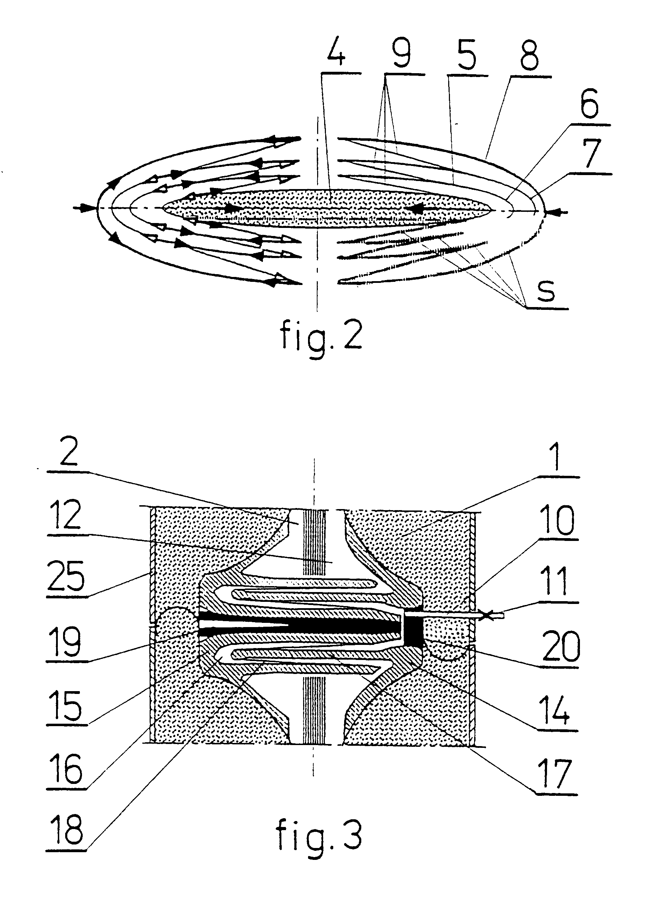

The described solution of the panel-overlap joint with the concave edge of the material layer covered with a foil strip may obviously be used for the panel shown on figure 1, to replace the edge construction consisting of double- and triple-armed slats shown in figure 3.

The invention offers the solution whose method of construction is more complex than solutions known hitherto, and requires a higher technology level, but the obtained insulation increase effect is incommensurably high. The panel version with shell distancing units, which takes advantage of all rationalizations of the invention, allows the heat penetration virtual coefficient to approximate λ=0,0002 W/m/K, whereas the sculptured, integral version λ=0,0005 W/m/K, which are the values several dozen times lower than the parameters of the most effective insulation materials known so far.

### Brief description of the drawings

The full understanding of the nature of the invention will be made possible by the description of model realizations of two panels visualized in the figures. Figure 1 shows the cross-section of the first panel with its shell distancing units, Figure 2 - the axial section through the distancing unit in schematic realization, Figure 3 - the cross-section through the panel edge junction zone, while Figure 4 - the cross-section through the jointed complex of panels in the second realization, with cogged material layers.

### Modes of carrying out the invention

The panel shown in Figure 1 possesses two material layers 1, placed at a distance from each other which constitutes the gap 2. Each of the material layers 1, which is made of high-strength thermoplastic PET foil, is covered with rigid polyurethane foam coating 3, of 0,5 mm thick, laminated on both sides with aluminum, inox or metallic glass foil. The polyurethane foam, apart from its high thermal insulation, is also characterized by strong adhesion to metal foil and low polymerization temperature from the liquid state. The coating 3 has the surface regularly reliefed with surfaces which are concave towards the outside of the material layer 1, with the positions of reliefs determined by the positioning of distancing units. For the making of foil relief the partial vacuum thermoplastic stamping method is the most beneficial, while for the sheet metal coating solution, pressure stamping is necessary.

Each distancing unit consists of a bearing element 4, two complexes comprising at least three shells: the inner shell 5, the smaller shell 6, the larger one 7, and the outer shell 8, as well as the tension strings 9. In the three-shell complex the inner shell 5 is simultaneously the smaller shell 6. The bowl-shaped shells 5, 6, 7, 8 are made of plastic, metal or glass, and enclose each other contactlessly, suspended on high-strength aramid fibres of kevlar or PBO type, which constitute the bearing element 9. The fibres are wound around the tip of the bearing element 4, and then through the consecutive shells to the outside. The wound fibre forms a zigzag line consisting of sections of alternating tangency with outer surface halves of consecutive shells and the linking contactless sections, which run between each tip zone of the smaller shell 6 and the edge of the larger shell 7. The ends of the fibres are glued or bighted to the outer shell 8. The path of the fibre is shown clearly on Fig. 2, which, in addition, illustrates the lengthened path of the thermal flux "s", the forces compressing the particular shells (darkened arrows) and the tensile forces (arrows with white arrow-heads). All the elements of distancing units are covered with a thin layer of highly thermally reflective metal.

Material layers 1 are wrapped with extemal screening layers 25, made of hard plastic or sheet metal. The gas evacuation pipe 10 is tightly fastened to the coating 3 of one material layer 1, through which it leads outside, where it ends with the clamp-shaped cutting-off element 11. The gas evacuation pipe 10 with the cutting-off element 11 enables the sucking-off of the air and obtaining the vacuum in the gap 2 after the assembly, and additionally allows the operating control and vacuum improvement. Through the gas evacuation pipe 10 an elastic, porous bar 26, saturated with powder getter silica gel, zeolite, activated carbon, barium alloy, etc. is inserted in the gap 2. In the central plane I-I of the gap 2 an antiradiation screen 12 is situated, suspended on ultrathin polymer fibres 13; it is made of a packet of several dozen, contactless sheets of metallized foil, 3-5 mm thick, sewn through with very thin polymer fibres and welded or glued.

On the margins of the panel the gap 2 is closed with a unit composed of two deeply-extruded sections: one double-pointed 14 and one triple-pointed 15, and of the bearing foil 18. The slats 14 and 15, made of plastic, are hermetically glued or seam welded with one arm to the edges of the material layer 1. The remaining arms of the slats 14 and 15 together form a labyrinth: two arms of the triple-pointed slat form the U -shaped trough 16, while the second arm 17 of the double-pointed slat 14 is introduced in the axis of symmetry into the U -trough 16. A strip of thin, high-strength Mylar bearing foil 18, metallized on both sides, or inox foil or strip of metallic glass, is glued or seam welded tightly with its edges to the outer surfaces of the arm which form part of the U -trough 16. The width of the bearing foil strip 18, corresponding to the distance between the material layers 1, is slightly smaller than the double depth of the U - trough 16. The bearing foil 18 performs the following tasks: it seals the gap 2 on the periphery, supports the distancing of periphery material layers 1 and transfers the lateral atmospheric pressure. Due to its negligible depth and considerable width it strongly reduces heat conductivity transfer, while its metallized surface simultaneously constitutes a screen for radiation heat exchange between the slats 14 and 15. For the purpose of insulating larger surfaces, the junction created between the margins of the panels which are in contact is equipped with two sealing tapes 19 and 20 or glued together. The shape of the tapes corresponds to the shape of the gaps between the external arms of the U-trough 16 and between the comers of the double-pointed slats 14. The sealing tapes 19 and 20 are made of ageing-resistant silicon microgum with closed pores or metallic tape. The sealing tape 20 has the gas evacuation pipe 10 pasted in, which ends with the cutting-off element 11. After the panels and seals have been pressed against each other, a vacuum pomp is connected to the gas evacuation pipe 10. The vacuum obtained in the junction causes the reduction of the thermal flux which flows through this zone, and simultaneously evokes strong pressure of the panels against each other. In the case of the need to disassemble the thermal insulation panels' screening layer, it is sufficient to allow aeration of the junction through the cutting-off element 11.

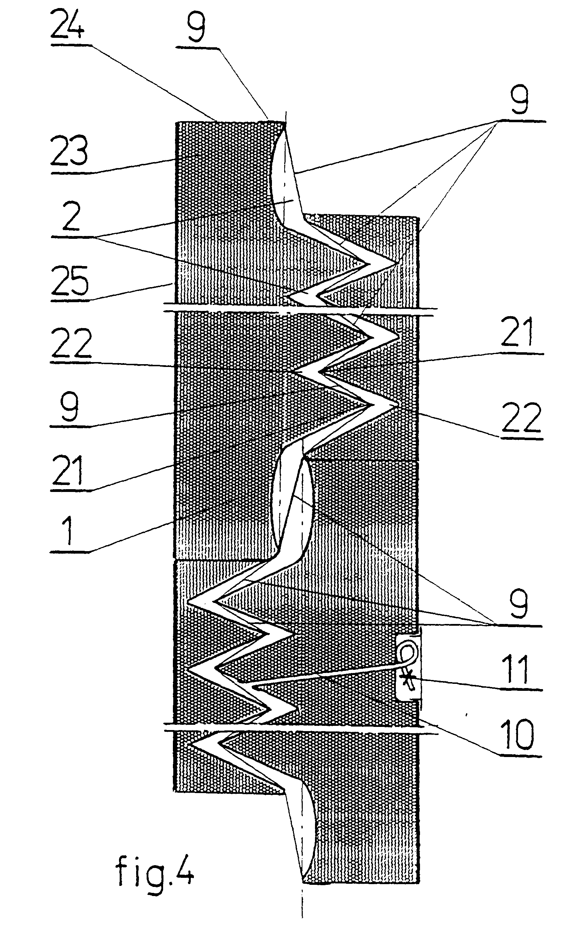

Figure 4 shows the panel according to the second realization of the invention. The task of the distancing unit is taken over by the walls of material layers 1, meshed with each other and reliefed with cogs 21 and niches 22. The material layers 1 are kept in a distance from each other, secured against the implosion by the tension string 9 which is stretched in a zigzag fashion, and altemated and fixed between neighbouring cog tips 21 of both layers. The tension string 9 is constituted by a net of kevlar or PBO fibres, covered on both sides with metallized polymer foil, which also serves as antiradiation screen. In this realization the coating 3 of the material layer 1 is formed by a deep negative-pressure thermal-stamping method from a rigid polymer sheet covered with aluminum or inox foil, or alternatively, it is stamped from metal, esp. inox, sheets. In the solution with the coating 3, the material layer 1 ending with the niche 22 has the peripheral overlap 23 whose surface is concave relative to the central plane I-I. The tension strip 9 made of metallic or metallic glass foil is tightly glued or seam welded to the front surface 24 of the overlap 23. In the junction which is created when two panels of mirror-image overlaps 23 have been pressed and glued against each other, the thermal flux must flow through a foil strip of small cross-section area and considerable length.

The panel's junction realization with the concave-surface, foil-covered and glued overlap, as described above, may obviously be introduced also in the panel realization according to Figure 1, to replace the double- and triple-pointed slats as the periphery complex.

The cases presented above do not limit the possibilities of realizing the invention, being only illustrative examples of the basic idea of the conversion of compressive forces into tensible forces by means of the distancing units.

## Claims

1. A thermo-insulating panel, constructed of a multilayer packet of materials of thermo-insulating properties, comprising at least two layers of material separated with a gap and tightly closed at the panel's periphery, and furthermore, whose adjoining material layer surfaces are covered with a coating made of gastight material of a high reflectivity coefficient and whose material layers are fixed relative to each other by means of distancing units, **characterized in that** the panel has distancing units converting the compressive forces into tensile forces and each of the distancing units possesses a bearing element (4) and two complexes of mutually embedded shells (5, 6, 7, 8), suspended on the ends and relative to each other by tension strings (9), each of which is wound around the end of the bearing element (4), the edge of the inner shell (5) and consecutively through the bottom of the smaller shell (6) and the edge of the larger shell (7) of the complex, and fixed with the ends to the outer shell (8), furthermore, the panel being equipped with the gas evacuation pipe (10), tightly fastened to the coating (3), leading through the material layer (1) to the outside and ending with the cutting-off element (11) through which a high vacuum is obtained in the gap (2) between the material layers (1).

2. The panel in accordance with claim 1, **characterized in that** between the distancing units the surfaces of material layers (1) covered with the coating (3) are reliefed with surfaces which are concave towards the outside of the material layer (1).

3. The panel in accordance with claim 1, **characterized in that** the bearing element (4) has the form of a rod, the shells are bowl-like, and the tension strings (9) are made of high-strength, esp. aramid or PBO fibre.

4. The panel in accordance with claim 1, **characterized in that** the bearing element (4) has the form of a slat, the shells (5, 6, 7, 8) are groove-like and the tension strings (9) are made of a high-strength, esp. aramid, fibre, a fibre-net, foil or a fibre-net sealed in foil.

5. The panel in accordance with claim 3 or 4, **characterized in that** the bearing element (4), the shells (5, 6, 7, 8) and the tension strings (9) are covered with a coating made of the material of a high reflectivity coefficient.

6. The panel in accordance with claim 1, **characterized in that** in the central plane (I-I) of the gap (2) the multilayer antiradiation screen (12) is installed.

7. The panel in accordance with claim 6, **characterized in that** the antiradiation screen (12) has the form of a packet of metallized foils, connected to each other pointwise with microgaps between the foils, and suspended between material layers (1) by means of polymer ultrathin fibres (13).

8. The panel in accordance with claim 1, **characterized in that** its margins constitute two deeply extruded sections: the double-pointed (14) and the triple-pointed (15) ones, each tightly fastened with one arm to the edge of the material layer (1), and whose remaining arms form a labyrinth comprising the U- trough (16), the triple-pointed slat (15) and the second arm (17) of the double-pointed slat (14), introduced in the former in the axis of symmetry, the arms being suspended on the bearing foil (18), tightly fastened to the outer surfaces of the U-trough (16) arms.

9. The panel in accordance with claim 8, **characterized in that** the surfaces of double-pointed (14) and triple-pointed slats (15) as well as the bearing foil (18) have the coating of material of a high reflectivity coefficient.

10. The panel in accordance with claim 8, **characterized in that** it possesses two sealing tapes (19, 20), whose shapes correspond to the shape of the space between the margins of the two panels which are in contact: one tape seals the space between the outer arms of the U -trough (16), the other - between the comers of double-pointed slats (14).

11. The panel in accordance with claim 10, **characterized in that** the tape (20) sealing the comers of double-pointed slats (14) has the gas evacuation pipe (10) which ends in the cutting-off element (11).

12. The panel in accordance with claim 1, **characterized in that** replaceable getter is introduced into the gap (2).

13. The panel in accordance with claim 12, **characterized in that** it possesses a replaceable elastic, linear porous agent (26), saturated with powder getter, inserted into the empty layer (2) through the gas evacuation pipe (10).

14. A thermo-insulating panel, constructed of a multilayer packet of materials of thermo-insulating properties, comprising at least two layers of material separated with a gap and tightly closed at the panel's periphery, and furthermore, whose adjoining material layer surfaces are covered with a coating made of gastight material of a high reflectivity coefficient and whose material layers are fixed relative to each other by means of distancing units, formed by the meshed cogs and niches made on both the adjoining surfaces of the material layers, separated with the gap by means of a fixed tension string, zigzagging and fixed between cog tips of both material layers, having the form of a high-strength, esp. aramid, glass, fibre, foil or a fibre net sealed in foil, furthermore the panel being equipped with a gas evacuation pipe, tightly fastened to the coating, leading through the material layer to the outside and closed with the cutting-off element, due to which in the gap between the material layers a high vacuum is obtained, **characterized in that** the panel has edges which form an overlap (23) made of the material layer (1) which ends with the niche (22), the glued or wrinkled overlap surface (23) has the surface which is concave relative to the central plane (I-I) and the foil tension strip (9) is tightly fastened to the front surface (24) of the overlap (9) and separately to each cog tip (21) inside the panel.

15. The panel in accordance with claim 14, **characterized in that** the foil which constitutes the tension string (9) is covered on both sides with the coating of material of a high reflectivity coefficient.

## Patentansprüche

1. Wärmeisolationspaneel, ausgeführt als ein vielschichtiges Paket aus dem Material mit wärmedämmenden Eigenschaften und zusammengesetzt aus mindestens zwei Materialschichten, die durch einen an den Plattenrändern dicht abgeschlossenen Spalt voneinander abgetrennt werden, in der darüber hinaus die angrenzenden Oberflächen beider Materialschichten durch eine Hülle aus gasdichtem Material mit hohem Reflexivitätskoeffizient überzogen sind, und bei der die Materialschichten gegeneinander mit Trenneinheiten ausgerichtet sind, **dadurch gekennzeichnet, dass** sie mit Trenneinheiten ausgestattet ist, welche die Druckkräfte in Zugkräfte umsetzen, und jede Trenneinheit jeweils ein tragendes Element (4) sowie zwei Sätze der einander umschliessenden Schalen (5, 6, 7, 8) besitzt, welche an deren Enden sowie gegeneinander mit Hilfe von Spannelementen (9) angehängt werden, die jeweils über die Enden des tragenden Elementes (4), den Rand der inneren Schale (5) und - der Reihe nach - den Boden der kleineren Schale (6) und den Rand der grösseren Schale (7) des ganzen Satzes eingewunden sind, und mit ihren Enden an die äussere Schale (8) befestigt werden, und diese Platte ist darüber hinaus mit einem Saugstutzen (10) ausgestattet, der dicht mit der Hülle (3) verbunden und durch die Materialschicht (1) nach aussen hinausgeführt wird sowie mit einem Absperrstück (11) beendet ist, durch das in dem Spalt (2) zwischen den Materialschichten (1) das Hochvakuum erzeugt wird.

2. Paneel nach Anspruch 1, **dadurch gekennzeichnet, dass** die mit der Hülle (3) überdeckten Oberflächen der Materialschichten (1) zwischen den Trenneinheiten sich aus plastisch abhebenden Oberflächen, die gegenüber der äusseren Materialschicht konvex sind, zusammensetzen.

3. Paneel nach Anspruch 1, **dadurch gekennzeichnet, dass** das tragende Element (4) die Form eines Stabes hat, die Schalen (5, 6, 7, 8) kelchförmig sind, und die Spannelemente (9) aus hochfestigen Fasern, insbesondere Aramidfasern oder Tectan (PBO) gefertigt werden.

4. Paneel nach Anspruch 1, **dadurch gekennzeichnet, dass** das tragende Element (4) die Form einer Leiste hat, die Schalen (5, 6, 7, 8) rinnenförmig sind, und die Spannelemente (9) aus hochfestigen Fasern, insbesondere Aramidfasern, einem aus diesen Fasern gefertigten Netz, einer Folie oder aus dem in die Folie eingeschmolzenen Fasernetz gefertigt werden.

5. Paneel nach Ansprüchen 3 oder 4, **dadurch gekennzeichnet, dass** das tragende Element (4), die Schalen (5, 6, 7, 8) und die Spannelemente (9) mit der Hülle aus einem Material mit hohem Reflexivitätskoeffizient überzogen sind.

6. Paneel nach Anspruch 1, **dadurch gekennzeichnet, dass** in der Mittelebene (I-I) des Spaltes (2) ein vielschichtiger Antiradiations-Schirm (12) angebracht ist.

7. Paneel nach Anspruch 6, **dadurch gekennzeichnet, dass** der Antiradiations-Schirm (12) die Form eines Pakets von metallisierten Folien hat, die miteinander punktartig, unter der Einhaltung von Mikroabständen, verbunden und zwischen den Materialschichten (1) mit Hilfe von sehr dünnen Polymerfasern (13) aufgehängt werden.

8. Paneel nach Anspruch 1, **dadurch gekennzeichnet, dass** ihre Ränder von zwei Profilleisten: einer zweiarmigen Leiste (14) und einer dreiarmigen Leiste (15), jede von ihnen mit einem Arm längst des Randes der Materialleiste (1) dicht eingespannt, gebilde+t werden, und deren übrigen Arme ein Labyrinth darstellen, der sich aus einer kleinen U-förmigen Rinne (16), der dreiarmigen Leiste (15), sowie dem in sie in der Symmetrieachse eingeführten zweiten Arm (17) der zweiarmigen Leiste (14) zusammensetzt, wobei diese Arme auf der Tragfolie (18), die an die äusseren Oberflächen der Arme der U-förmigen Rinne (16) fest gebunden ist, aufgehängt werden.

9. Paneel nach Anspruch 8, **dadurch gekennzeichnet, dass** die Oberflächen der zweiarmigen Leisten (14), dreiarmigen Leisten (15) und der Tragfolie (18) eine Hülle haben, die sich aus einem Material mit hohem Reflexivitätskoeffizient zusammensetzt.

10. Paneel nach Anspruch 8, **dadurch gekennzeichnet, dass** sie zwei Isolierbände (19, 20) hat, deren Form durch den Raum zwischen den Rändern von zwei angrenzenden Platten bestimmt ist: die eine zwischen den äusseren Armen der U-förmigen Rinnen (16), und die andere - zwischen den Rändern der zweiarmigen Leisten (14).

11. Paneel nach Anspruch 10, **dadurch gekennzeichnet, dass** das die Ränder der zweiarmigen Leisten (14) abdichtende Band (20) einen Saugstutzen (10) hat, der mit einem Absperrstück (11) abgeschlossen wird.

12. Paneel nach Anspruch 1, **dadurch gekennzeichnet, dass** in den Raum des Spaltes (2) ein austauschbarer Fangstoff eingeführt wird.

13. Paneel nach Anspruch 12, **dadurch gekennzeichnet, dass** sie einen austauschbaren, elastischen porösen Linienträger (26) hat, der mit dem Fangstoff gesättigt wird und in den Hohlraum (2) durch den Saugstutzen (10) eingeführt wird.

14. Wärmeisolationspaneel, ausgeführt als ein vielschichtiges Paket aus dem Material mit wärmedämmenden Eigenschaften und zusammengesetzt aus mindestens zwei Materialschichten, die durch einen an den Plattenrändern dicht abgeschlossenen Spalt voneinander abgetrennt werden, in der darüber hinaus die angrenzenden Oberflächen der Materialschichten durch eine Hülle aus gasdichtem Material mit hohem Reflexivitätskoeffizient überzogen sind, und bei der die Materialschichten gegeneinander mit einer Trenneinheit ausgerichtet sind, die durch miteinander verzahnte Vorsprünge und Nischen, die an den beiden anliegenden Oberflächen der Materialschichten ausgeführt und durch einen Spalt mit Hilfe eines dort angebrachten Spannelementes abgetrennt sind, welche zickzackartig verläuft und zwischen den Spitzen der Vorsprünge beider Materialschichten gespannt wird und als ein Netz aus hochfestigen Fasern, insbesondere Aramid- bzw. Glasfasern, einer Folie oder einem in die Folie eingeschmolzenen Fasernetz ausgebildet ist, und diese Platte ist darüber hinaus mit einem Saugstutzen ausgestattet, der dicht mit der Hülle verbunden, durch die Materialschicht nach aussen hinausgeführt und mit einem Absperrstück beendet ist, mit dessen Hilfe in dem Spalt zwischen den Materialschichten das Hochvakuum erzeugt wird, **dadurch gekennzeichnet, dass** sie Ränder hat, aus denen eine Überlappung (23), die aus der Materialschicht (1) gebildet und mit einer Nische (22) abgeschlossen wird, geformt ist, sowie dass diese angeleimte oder gekräuselte Überlappung (23) eine gegenüber der mittleren Oberfläche (I-I) konkav gestaltete Fläche hat, und das Spannelement (9) dicht an die Stirnfläche (24) der Überlappung (23), und im Innern der Platte separat an die jeweiligen Spitzen der Vorsprünge (21) befestigt wird.

15. Paneel nach Anspruch 14, **dadurch gekennzeichnet, dass** die Folie, welche das Spannelement (9) darstellt, beidseitig mit der Hülle aus einem Material mit hohem Reflexivitätskoeffizient überzogen ist.

## Revendications

1. Panneau thermo-isolant ayant la construction d'un paquet de plusieurs couches en matériaux calorifuges, composé au moins de deux couches de matériaux séparés par un joint fermé hermétiquement à la bordure du panneau dans lequel, en plus de cela, les surfaces voisines des couches de matériau sont enduites d'un revêtement en matériau étanche aux gaz à un coefficient élevé de réflexion, et dans lequel les couches de matériau sont fixées respectivement par des blocs de distance, **caractérisé en ce qu'**il est muni de blocs de distance convertissant les efforts de compression en efforts de traction, chacun des blocs de distance possédant un élément portant (4) et deux jeux de coques qui s'enveloppent réciproquement (5, 6, 7, 8), accrochées à ses bouts et par rapport à elles-mêmes à l'aide d'éléments tirants - brins (9) dont chacun est enroulé sur le bout de l'élément portant (4), le bord de la coque intérieure (5) et tour à tour sur le fond de la coque la plus petite (6) et sur le rebord de la coque la plus grande (7) de l'ensemble, et fixé par les bouts à la coque extérieure (8), de plus, le panneau est muni d'une tubulure d'aspiration (10), unie hermétiquement au revêtement (3), sortant à l'extérieur à travers la couche de matériau (1) et au bout de laquelle se trouve l'élément retranchant (11), par lequel un vide poussé est créé dans le joint (2) entre les couches de matériau (1).

2. Panneau selon la revendication 1, **caractérisé en ce qu'**entre les blocs de distance les surfaces des couches de matériau (1) enduites de revêtement (3) sont façonnées à l'aide de surfaces qui sont convexes à l'extérieur de la couche de matériau (1).

3. Panneau selon la revendication 1, **caractérisé en ce que** l'élément portant (4) a la forme d'une tige, les coques (5, 6, 7, 8) celle d'une cloche, et les brins (9) sont faits en fibre hautement résistante, notamment en aramide ou en tectane (PBO).

4. Panneau selon la revendication 1, **caractérisé en ce que** l'élément portant (4) a la forme d'une barre, les coques (5, 6, 7, 8) sont cannelées, et les brins (9) ont la forme d'une fibre hautement résistante, notamment en aramide, d'un filet en telle fibre, de la feuille ou d'un filet de fibres engagées dans la feuille.

5. Panneau selon la revendication 3 ou 4, **caractérisé en ce que** l'élément portant (4), les coques (5, 6, 7, 8) et les brins (9) sont enduits d'un revêtement en matériau à un coefficient élevé de réflexion.

6. Panneau selon la revendication 1, **caractérisé en ce que** dans le plan médian (I-I) du joint (2) est fixé un écran anti-radiation de plusieurs couches (12).

7. Panneau selon la revendication 6, **caractérisé en ce que** l'écran anti-radiation (12) a la forme d'un paquet de feuilles métalliques reliées ponctuellement tout en gardant des microdistances, et suspendues entre les couches de matériau (1) a l'àide de fibres polymères (13) très fines.

8. Panneau selon la revendication 1, **caractérisé en ce que** ses bords sont constitués par deux barres profilées : une barre à deux bras (14) et une barre à trois bras (15), chacune fixée hermétiquement le long de la bordure de la couche de matériau (1), et dont les autres bras forment un labyrinthe composé de la rigole "U" (16), de la barre à trois bras (15) et du second bras (17) de la barre à deux bras (14), introduit sur l'axe de symétrie, ces bras étant suspendus sur la feuille portante (18) fixée hermétiquement aux surfaces extérieures des bras de la rigole "U" (16).

9. Panneau selon la revendication 8, **caractérisé en ce que** les surfaces des barres à deux bras (14), à trois bras (15) et de la feuille portante (18) possèdent un revêtement en matériau à un coefficient élevé de réflexion.

10. Panneau selon la revendication 8, **caractérisé en ce qu'**il possède deux bandes étanchantes (19, 20) dont la forme est délimitée par l'espace entre les rebords de deux panneaux contigus: l'une entre les bras extérieurs des rigoles "U" (16), l'autre entre les coins des barres à deux bras (14).

11. Panneau selon la revendication 10, **caractérisé en ce que** la bande étanchante (20) des coins des barres à deux bras (14) possède une tubulure d'aspiration (10) terminée par un élément retranchant (11).

12. Panneau selon la revendication 1, **caractérisé en ce qu'**un dégazeur remplaçable est introduit dans l'espace du joint (2).

13. Panneau selon la revendication 12, **caractérisé en ce qu'**elle possède un support poreux (26) linéaire, remplaçable, saturé du dégazeur, introduit dans la couche vide (2) par la tubulure d'aspiration (10).

14. Panneau thermo-isolant ayant la construction d'un paquet de plusieurs couches en matériaux calorifuges, composé au moins de deux couches de matériaux séparés par un joint fermé hermétiquement au rebord du panneau dans lequel, en plus de cela, les surfaces voisines des couches de matériau sont enduites d'un revêtement en matériau étanche aux gaz à un coefficient élevé de réflexion, et dans lequel les couches de matériau sont fixées respectivement par un bloc de distance_formé par des saillies et cavités qui s'engrènent, réalisées sur les deux surfaces voisines des couches de matériau, séparées par un joint grâce au brin fixé, situé en zigzag et fixé entre les sommets des saillies des deux couches de matériau, ayant la forme d'un filet de fibre hautement résistante, notamment en aramide, en verre, de la feuille ou d'un filet de fibres engagées dans la feuille ; de plus, le panneau est muni d'une tubulure d'aspiration unie hermétiquement au revêtement, sortant à l'extérieur à travers la couche de matériau et au bout de laquelle se trouve l'élément retranchant, par lequel un vide poussé est créé dans le joint entre les couches de matériau, **caractérisé en ce que** ses rebords forment un recouvrement (23) fait en couche de matériau (1) terminé par une alvéole (22), le recouvrement collé ou froncé (23) a une surface concave par rapport au plan médian (I-I) et le brin en feuille (9) est hermétiquement fixé à la surface frontale (24) du recouvrement (23) et, séparément, à chaque sommet des saillies (21) à l'intérieur du panneau.

15. Panneau selon la revendication 14, **caractérisé en ce que** la feuille qui constitue le brin (9) est enduite des deux côtés d'un revêtement en matériau à un coefficient élevé de réflexion.
